(19) **Europäisches Patentamt**
**European Patent Office**
**Office européen des brevets**

(11) **EP 1 921 103 A1**

(12) **EUROPEAN PATENT APPLICATION**
published in accordance with Art. 153(4) EPC

(43) Date of publication:
**14.05.2008 Bulletin 2008/20**

(51) Int Cl.:
**C08G 63/85** [(2006.01)]

(21) Application number: **06783105.7**

(22) Date of filing: **28.08.2006**

(86) International application number:
**PCT/JP2006/316876**

(87) International publication number:
**WO 2007/026650 (08.03.2007 Gazette 2007/10)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.08.2005 JP 2005247398**
**30.09.2005 JP 2005288958**

(71) Applicant: **Mitsubishi Chemical Corporation Minato-ku Tokyo 108-0014 (JP)**

(72) Inventors:
• **NODA, Kenji Tokyo 104-0041 (JP)**
• **YAMAMOTO, Masanori Yokkaichi-shi Mie 510-8530 (JP)**

• **MATSUZONO, Shinichiro Yokkaichi-shi Mie 510-8530 (JP)**
• **HAMANO, Toshiyuki Yokkaichi-shi Mie 510-8530 (JP)**
• **AKAHANE, Yoshio Yokkaichi-shi Mie 5108530 (JP)**
• **SHOUJI, Hidekazu Yokkaichi-shi Mie 510-8530 (JP)**

(74) Representative: **HOFFMANN EITLE Patent- und Rechtsanwälte Arabellastrasse 4 81925 München (DE)**

(54) **POLYBUTYLENE TEREPHTHALATE AND PROCESS FOR PRODUCTION THEREOF**

(57)     An object of the present invention is to provide polybutylene terephthalate which has excellent color tone, hydrolysis resistance, heat stability, transparency and moldability as well as a less content of impurities, can be produced with maintaining its productivity while preventing from generation of tetrahydrofuran as a by-product, and can be suitably applied to films, monofilaments, fibers, electric and electronic parts, automobile parts, etc.

In an aspect of the present invention, there is provided a process for continuously producing polybutylene terephthalate from terephthalic acid and 1,4-butanediol in a presence of a catalyst comprising a titanium compound and a compound of at least one metal selected from Group 1 and Group 2 of the Periodic Table, which process satisfies such the following requirements (a) to (c) that:
(a) an oligomer is obtained by conducting a continuously esterification reaction of terephthalic acid and 1,4-butanediol in the presence of titanium catalyst in an amount of not more than 460 $\mu$mol as a titanium atom based on 1 mol of terephthalic acid unit;
(b) polycondensation reaction of the said oligomer is continuously conducted in the presence of compound of at least one metal selected from Group 1 and Group 2 of the Periodic Table as the catalyst in an amount of not more than 450 $\mu$mol as the metal atom based on 1 mol of terephthalic acid unit; and
(c) the said compound of at least one metal may be added to a stage before obtaining an oligomer having esterification conversion of not less than 90% in an amount of not more than 300 $\mu$mol as the metal atom based on 1 mol of terephthalic acid unit, and the said compound of at least one metal may be added to a stage on or after obtaining an oligomer having esterification conversion of not less than 90% in an amount of not less than 10 $\mu$mol as the metal atom based on 1 mol of terephthalic acid unit.

EP 1 921 103 A1

**Description**

TECHNICAL FIELD

The present invention relates to polybutylene terephthalate and process for producing thereof, and more particularly, it relates to polybutylene terephthalate which has excellent color tone, hydrolysis resistance, heat stability, transparency and moldability as well as a less content of impurities, can be produced with maintaining its productivity while preventing from generation of tetrahydrofuran as a by-product, and can be suitably applied to films, monofilaments, fibers, electric and electronic parts, automobile parts, etc, and also relates to a process for producing thereof.

Polybutylene terephthalate as a typical engineering plastic among thermoplastic polyester resins has been extensively used as a raw material of injection-molded articles such as automobile parts, electric and electronic parts and precision equipment parts because of easiness of molding as well as excellent mechanical properties, heat resistance, chemical resistance, aroma-retention property and other physical and chemical properties. In recent years, there is a tendency that polybutylene terephthalate is also used in more extensive applications such as films, sheets, monofilaments and fibers owing to the above excellent properties. In these technical fields, polybutylene terephthalate having higher molecular weight than that of conventional injection-molded product is required.

However, polybutylene terephthalate is not necessarily sufficient in hydrolysis resistance, and tends to undergo problems such as deterioration in mechanical properties due to the decrease of a molecular weight thereof especially when used under wet-heat conditions. In general, it is known that polybutylene terephthalate having a higher end carboxyl group concentration are more deteriorated in hydrolysis resistance (for example, refer to Japanese Patent Application Laid-Open (KOKAI) No. 9-316183), thereby causing significant problems such as a decrease in a molecular weight thereof due to hydrolysis as well as deterioration in the mechanical properties thereof.

To solve the above problems, there has been extensively used such a method in which polybutylene terephthalate obtained by melt-polymerization method is once solidified and then subjected to solid state polymerization at a temperature lower than a melting point thereof to decrease an end carboxyl group concentration thereof (for example, refer to Japanese Patent Application Laid-Open (KOKAI) No. 9-316183). However, since this method requires that once cooled and solidified polybutylene terephthalate is again heated to rise the temperature of polybutylene terephthalate, there is a problem of increasing energy loss. Also, since a melt molding process for polybutylene terephthalate is ordinarily conducted at a temperature not lower than the melting point thereof, even though the end carboxyl group concentration of polybutylene terephthalate is decreased by the solid state polymerization, the conventionally produced polybutylene terephthalate tends to undergo such a problem that its end carboxyl group concentration is increased again upon the molding. The increase in end carboxyl group concentration of polybutylene terephthalate tends to induce a reaction for generating butadiene or tetrahydrofuran (for example, refer to "Handbook of Saturated Polyester Resins", December 22, 1989, published by The Nikkan Kogyo Shinbun, Ltd., pp. 192-193 and 304). For this reason, there tends to arise such a problem that the amount of gases generated upon the molding is increased.

Also, it is known that such velocity of increase in the end carboxyl group concentration upon melting is accelerated by the existence of a titanium compound added as the catalyst in polybutylene terephthalate. If the amount of the titanium compound used is lessened to prevent the increase of the end carboxyl group concentration, the polymerization rate tends to become too slow. Therefore, the polymerization temperature must be increased in order to produce polybutylene terephthalate at a practically acceptable polymerization rate. As a result, the use of the high polymerization temperature tends to accelerate the decomposition reaction causing the increase in the end carboxyl group concentration, thereby failing to decrease the end carboxyl group concentration to a desired level. In addition, such high temperature reaction tends to cause deterioration in color tone thereof, resulting in problems such as poor commercial value thereof.

To solve the above problems, there has been proposed a method in which a titanium compound and a specific metal compound as catalysts are used at a specific molar ratio to lessen the polymerization temperature (for example, refer to Japanese Patent Application Laid-Open (KOKAI) No. 8-20638) and a method in which a titanium compound having a specific condition is used (for example, refer to Japanese Patent Application Laid-Open (KOKAI) No. 8-41182). However, these methods fail to sufficiently solve the above problems and, therefore, is still unsatisfactory to meet the recent requirement for a high quality of polybutylene terephthalate.

As methods for producing polybutadiene terephthalate, in general, there has been known an ester exchange method (DMT method) using dimethyl terephthalate and 1,4-butanediol as row materials, and a direct polymerization method using terephthalic acid and 1,4-butanediol. However, since in the ester exchange method, there is a problem of recovering treatment of by-produced low-molecular weight substances because of generation of methanol as a reaction by-product, in recent years, the direct polymerization method has been noticed from the standpoints of high efficiency of use of raw materials. Further, from the standpoints of stable quality of products, miniaturization in size of production facilities and good energy efficiency, there has been noticed a direct continuous polymerization method, in which these raw materials are continuously supplied to continuously obtain the products.

However, the titanium compound using in the production process of polybutadiene terephthalate tends suffer from problems such as partial deactivation thereof in the course of the production process of polybutadiene terephthalate and this partial deactivation tends to become more remarkable in the case of a direct continuous polymerization method using terephthalic acid as the row material (for example, Japanese Patent Application Laid-Open (KOKAI) Nos. 2002-284868 and 2002-284870). The deactivation of titanium catalyst causes such serious problems of, not to mention deterioration of reactivity thereof, and also deterioration of haze and increase of impurities.

To solve the above problems, there have been proposed a method of controlling the amount of an organotitanium compound added upon production of the polybutylene terephthalate, and allowing an organotin compound to coexist in the early esterification reaction stage (for example, Japanese Patent Application Laid-Open (KOKAI) Nos. 2002-284868 and 10-330469), and a method of decreasing impurities or haze due to the catalyst by dividing the esterification reaction of continuously reacting terephthalic acid with 1,4-butanediol into two stages, wherein the organotin compound is supplied only to the first esterification reaction stage, and the organotitanium compound is further supplied to the second esterification reaction stage (for example, Japanese Patent Application Laid-Open (KOKAI) No. 10-330468). However, the above conventional methods still fail to solve the problems concerning impurities and haze, and rather have such a problem that the addition of the organotin compound in large amount tends to cause deterioration in color tone of the obtained polybutylene terephthalate.

Further, in the direct continuous polymerization method of polybutylene terephthalate, also there is a problem that tetrahydrofuran generates as a by-product at early esterification reaction stage and the efficiency of use of raw materials of 1,4-butanediol is deteriorated. To solve this problem, there has been proposed a method in which a molar ratio of terephthalic acid to 1,4-butanediol at the esterification reaction stage is set to relatively low level and a tin compound co-exists other than titanium compound (for example, Japanese Patent Application Laid-Open (KOKAI) No. 10-330469). However, the haze of obtained polybutylene terephthalate solution is still high and the above problem of catalyst deactivation is still not solved. In addition, there has been proposed a method comprising conducting the esterification reaction at a specific temperature and under a specific pressure (for example, Japanese Patent Application Laid-Open (KOKAI) No. 62-195017). However, in also this method, it has been difficult to prevent decreasing the amount of the by-produced tetrahydrofuran and deactivation of the catalyst simultaneously.

## DISCLOSURE OF THE INVENTION

## SUBJECT TO BE SOLVED BY THE INVENTION

The present invention has been conducted to solve the above conventional problems. An object of the present invention is to provide polybutylene terephthalate which has excellent color tone, hydrolysis resistance, heat stability, transparency and moldability as well as a less content of impurities, can be produced with maintaining its productivity while preventing from generation of tetrahydrofuran as a by-product, and can be suitably applied to films, monofilaments, fibers, electric and electronic parts, automobile parts, etc, and also provided a process for producing thereof.

## MEANS FOR SOLVING THE SUBJECT

As a result of the present inventors' earnest studies for solving the above problems, it has been found that when the esterification reaction and polymerization reaction is conducted by using a titanium compound and a compound of at least one metal selected from Group 1 and Group 2 of the Periodic Table as catalysts under specific embodiments, surprisingly, it is possible that the deactivation of titanium catalyst can be prevented, a polybutylene terephthalate having a low concentration of end carboxyl group can be obtained while preventing the increase of end carboxyl group concentration due to a heat decomposition reaction thereof, further, the increase of end carboxyl group concentration at the melt-extrusion stage and molding stage can be prevented, and in addition, a polybutylene terephthalate having excellent color tone and heat stability can be produced efficiently because the polycondensation reaction is considerably accelerated. The present invention has been attained on the basis of the above finding.

To accomplish the aim, in a first aspect of the present invention, there is provided a polybutylene terephthalate produced in a presence of a catalyst comprising a titanium compound and a compound of at least one metal selected from Group 1 and Group 2 of the Periodic Table which polybutylene terephthalate has a titanium content of not more than 460 $\mu$mol as the titanium atom based on 1 mol of terephthalic acid unit, has a content of the compound of at least one metal selected from Group 1 and Group 2 of the Periodic Table of not more than 450 $\mu$mol as the metal atom based on 1 mol of terephthalic acid unit, and has an intrinsic viscosity of not less than 1.10 dL/g.

In a second aspect of the present invention, there is provided a process for continuously producing polybutylene terephthalate from terephthalic acid and 1,4-butanediol in a presence of a catalyst comprising a titanium compound and a compound of at least one metal selected from Group 1 and Group 2 of the Periodic Table, which process satisfies such the following requirements (a) to (c) that:

(a) an oligomer is obtained by conducting a continuously esterification reaction of terephthalic acid and 1,4-butanediol in the presence of titanium catalyst in an amount of not more than 460 µmol as a titanium atom based on 1 mol of terephthalic acid unit;

(b) polycondensation reaction of the said oligomer is continuously conducted in the presence of compound of at least one metal selected from Group 1 and Group 2 of the Periodic Table as the catalyst in an amount of not more than 450 µmol as the metal atom based on 1 mol of terephthalic acid unit; and

(c) the said compound of at least one metal may be added to a stage before obtaining an oligomer having esterification conversion of not less than 90% in an amount of not more than 300 µmol as the metal atom based on 1 mol of terephthalic acid unit, and the said compound of at least one metal may be added to a stage on or after obtaining an oligomer having esterification conversion of not less than 90% in an amount of not less than 10 µmol as the metal atom based on 1 mol of terephthalic acid unit.

In a third aspect of the present invention, there is provided a process for producing polybutylene terephthalate comprising further conducting solid state polycondensation of polybutylene terephthalate produced by the process as defined in the above process at a temperature of less than the melting point of polybutylene terephthalate.

EFFECT OF THE INVENTION

According to the present invention, there is provided a polybutylene terephthalate and process for producing thereof which polybutylene terephthalate shows excellent color tone, hydrolysis resistance, heat stability, transparency and moldability, has a less content of impurities and also is suitably used in applications such as films, monofilaments, fibers, electric and electronic parts and automobile parts.

BRIEF DESCRIPTION OF THE DRAWINGS

Fig. 1 is an explanatory view showing an example of an esterification reaction process adopted in the present invention.

Fig. 2 is an explanatory view showing an example of a polycondensation reaction process adopted in the present invention.

EXPLANATION OF REFERENCE NUMBER

[0018]

1: Raw material feed line
2: Recirculation line
3: Titanium catalyst feed line
4: Oligomer discharge line
5: Distillate line
6: Discharge line
7: Circulation line
8: Discharge line
9: Gas discharge line
10: Condensate line
11: Discharge line
12: Circulation line
13: Discharge line
14: Vent line
15: Metal compound feed line
A: Reactor
B: Discharge pump
C: Rectifying column
D and E: Pump
F: Tank
G: Condenser
L1 and L3: Discharge line

L2, L4 and L6: Vent line
L5: Polymer discharge line
L8: 1,4-butanediol feed line
L7: Metal compound feed line
a: First polycondensation reactor
d: Second polycondensation reactor
k: Third polycondensation reactor
c, e and m: Discharging gear pump
g: Die head
h: Rotary cutter

BEST MODE FOR CARRYING OUT THE INVENTION

The present invention is described in detail below. The polybutylene terephthalate of the present invention (hereinafter referred to merely as "PBT") is a polymer having a structure including ester bonds between terephthalic acid units and 1,4-butanediol units, in which not less than 50 mol% of dicarboxylic acid units constituting the polybutylene terephthalate comprise the terephthalic acid units, and not less than 50 mol% of diol units constituting the polybutylene terephthalate comprise the 1,4-butanediol units. The terephthalic acid units percentage is preferably not less than 70 mol%, more preferably not less than 80 mol%, still more preferably not less than 95 mol%, especially preferably not less than 98 mol% based on the whole dicarboxylic acid units, and the 1,4-butanediol units percentage is preferably not less than 70 mol%, more preferably not less than 80 mol%, still more preferably not less than 95 mol%, especially preferably not less than 98 mol% based on the whole diol units. When the content of the terephthalic acid units or the 1,4-butanediol units is less than 50 mol%, the resultant PBT tends to be deteriorated in crystallization velocity, resulting in poor moldability thereof.

In the present invention, the dicarboxylic acid components other than terephthalic acid are not particularly limited. Examples of the dicarboxylic acid components other than terephthalic acid may include aromatic dicarboxylic acids such as phthalic acid, isophthalic acid, 4,4'-diphenyldicarboxylic acid, 4,4'-diphenyletherdicarboxylic acid, 4,4'-benzophenonedicarboxylic acid, 4,4'-diphenoxyethanedicarboxylic acid, 4,4'-diphenylsulfonedicarboxylic acid and 2,6-naphthalenedicarboxylic acid; alicyclic dicarboxylic acids such as 1,2-cyclohexanedicarboxylic acid, 1,3-cyclohexanedicarboxylic acid and 1,4-cyclohexane dicarboxylic acid; and aliphatic dicarboxylic acids such as malonic acid, succinic acid, glutaric acid, adipic acid, pimelic acid, suberic acid, azelaic acid and sebacic acid. These dicarboxylic acid components may be introduced into the polymer skeleton using dicarboxylic acids themselves or dicarboxylic acid derivatives such as dicarboxylic acid esters and dicarboxylic acid halides as raw materials.

In the present invention, the diol components other than 1,4-butanediol are not particularly limited. Examples of the diol components other than 1,4-butanediol may include aliphatic diols such as ethylene glycol, diethylene glycol, polyethylene glycol, 1,2-propanediol, 1,3-propanediol, polypropylene glycol, polytetramethylene glycol, dibutylene glycol, 1,5-pentanediol, neopentyl glycol, 1,6-hexanediol and 1,8-octanediol; alicyclic diols such as 1,2-cyclohexanediol, 1,4-cyclohexanediol, 1,1-cyclohexane dimethylol and 1,4-cyclohexane dimethylol; and aromatic diols such as xylylene glycol, 4,4'-dihydroxybiphenyl, 2,2-bis(4-hydroxyphenyl)propane and bis(4-hydroxyphenyl)sulfone.

In the present invention, as comonomers copolymerizable with the dicarboxylic acid components and the diol components, there may also be used monofunctional components such as hydroxycarboxylic acids, e.g., lactic acid, glycolic acid, m-hydroxybenzoic acid, p-hydroxybenzoic acid, 6-hydroxy-2-naphthalenecarboxylic acid and p-β-hydroxyethoxybenzoic acid, alkoxycarboxylic acids, stearyl alcohol, benzyl alcohol, stearic acid, benzoic acid, t-butylbenzoic acid and benzoylbenzoic acid; and tri- or more polyfunctional components such as tricarballylic acid, trimellitic acid, trimesic acid, pyromellitic acid, gallic acid, trimethylol ethane, trimethylol propane, glycerol and pentaerythritol.

First, in the present invention, an oligomer is produced by conducting continuously esterification of terephthalic acid and 1,4-butanediol in the presence of titanium catalyst in an amount of not more than 460 μmol as a titanium atom based on 1 mol of terephthalic acid unit.

Specific examples of the titanium compound may include inorganic titanium compounds such as titanium oxide and titanium tetrachloride; titanium alcoholates such as tetramethyl titanate, tetraisopropyl titanate and tetrabutyl titanate; and titanium phenolates such as tetraphenyl titanate. Among the titanium compounds, preferred are tetraalkyl titanates. Of these titanium compounds, more preferred is tetrabutyl titanate.

In the present invention, the upper limit of the amount of titanium catalyst used is preferably 320 μmol, more preferably 230 μmol, especially preferably 190 μmol based on titanium atom. The lower limit of the amount of titanium catalyst used is not specified and usually 45 μmol, preferably 90 μmol, still more preferably 130 μmol based on titanium atom. When the amount of titanium catalyst used is too large, the resultant polybutylene terephthalate tends to be deteriorated in color tone, hydrolytic resistance, and to increase content of impurities derived from the inactivated titanium catalyst, and when the amount of titanium catalyst used is too small, the polymerizability tends to be deteriorated and amount of THF which is a by-product tends to increase. In the present invention, in case where an esterification equipment having plural stages is used and the esterification conversion is increased gradually, it is not necessary to add all amount of the titanium catalyst into the first stage of esterification equipment and it is possible to add no titanium catalyst into the first stage of esterification equipment. Namely, it is sufficient to add the necessary amount of titanium catalyst until the end of esterification reaction.

The titanium catalyst can be added directly into an esterification reactor as it is without solving or diluting with a solvent. But, it is preferable that the titanium catalyst is diluted with a solvent such as 1,4-butanediol in view of stabilizing the amount of the catalyst supplied and reducing adverse influences such as generation of impurities due to deterioration or deactivation of titanium catalyst by a heating medium jacket of the reactor or the like. In this case, the catalyst concentration in the diluted catalyst solution can be properly selected with no limitation, but usually 0.01 to 20% by weight, preferably 0.05 to 10% by weight, more preferably 0.08 to 8% by weight as the concentration of titanium catalyst.

Especially, from the standpoint of reducing the impurities, it is preferable that the titanium catalyst is supplied in the form of 0.01 to 20% by weight (preferably 1 to 10% by weight) of 1,4-butanediol solution and the water concentration in the diluted catalyst solution is 0.05 to 1.0% by weight. Further, it is preferable that the titanium catalyst solution is separately supplied to the esterification reactor without prior mixing with terephthalic acid from the standpoint of preventing deterioration in quality, crystallization of the catalyst and generation of impurities.

Further, in the production process of the present invention, it is essential to conduct the esterification reaction in the presence of titanium catalyst. But, titanium catalyst may be further added at any stage after the esterification reaction and before the polycondencation reaction or any stage in the polycondencation reaction. In this case, the upper limit of the content of titanium catalyst in the finally obtained polybutylene terephthalate is preferably 460 $\mu$mol, more preferably 320 $\mu$mol, especially preferably 230 $\mu$mol based on titanium atom, especially preferably 190 $\mu$mol as a titanium atom based on 1mol of terephthalic acid unit. When the content of titanium catalyst exceed the above upper limit, the resultant polybutylene terephthalate tends to be deteriorated in color tone, hydrolytic resistance, and increase content of impurities derived from the inactivated titanium catalyst.

In addition to titanium, tin may be used as a catalyst. Tin may be usually used in the form of a tin compound. Specific examples of the tin compound may include dibutyl tin oxide, methylphenyl tin oxide, tetraethyl tin, hexaethyl ditin oxide, cyclohexahexyl ditin oxide, didodecyl tin oxide, triethyl tin hydroxide, triphenyl tin hydroxide, triisobutyl tin acetate, dibutyl tin diacetate, diphenyl tin dilaurate, monobutyl tin trichloride, tributyl tin chloride, dibutyl tin sulfide, butylhydroxy tin oxide, methylstannoic acid, ethylstannoic acid and butylstannoic acid.

The tin tends to deteriorate a color tone of the resultant PBT. Therefore, the amount of the tin added is usually not more than 200 ppm, preferably not more than 100 ppm, more preferably not more than 10 ppm, calculated as a tin atom. Most preferably, no tin is added to the PBT.

Next, in the present invention, the above oligomer is subject to continuously polycondensation reaction in the presence of compound of at least one metal selected from Group 1 and Group 2 of the Periodic Table in an amount of not more than 450 $\mu$mol as the metal atom based on 1 mol of terephthalic acid unit. The upper limit of the above amount of compound of at least one metal selected from Group 1 and Group 2 of the Periodic Table present at the polycondensation reaction stage is preferably 300 $\mu$mol, more preferably 180 $\mu$mol, especially preferably 130 $\mu$mol, most preferably 100 $\mu$mol as the metal atom based on 1 mol of terephthalic acid unit. When the upper limit of amount of compound of at least one metal selected from Group 1 and Group 2 of the Periodic Table present at the polycondensation reaction stage exceeds the above upper limit, the polycondensation reaction rate tends to be slow as the polycondensation reaction proceeds and the obtained polybutylene terephthalate may be deteriorated in the color tone and hydrolysis resistance. In case of containing plural kinds of metals, the above amount of compound present at the polycondensation reaction stage means a total amount of plural kinds of metals.

Specific examples of the metal compound containing a metal of Group 1 of the Periodic Table may include various compounds of lithium, sodium, potassium, rubidium and cesium. Specific examples of the metal compound containing a metal of Group 2 of the Periodic Table may include various compounds of beryllium, magnesium, calcium, strontium, and barium. Of these metal compounds, from the standpoints of easy handling and availability as well as high catalyst effect, preferred are lithium compounds, sodium compounds, potassium compounds, magnesium compounds, and calcium compounds, and more preferred are magnesium compounds and lithium compounds in view of high catalyst effect, especially, still more preferred is magnesium compounds. Specific examples of the magnesium compounds may include magnesium acetate, magnesium hydroxide, magnesium carbonate, magnesium oxide, magnesium alkoxide and magnesium hydrogen phosphate. Of these, magnesium acetate is preferred.

The above compound of at least one metal may be added to a stage before obtaining an oligomer having esterification conversion of not less than 90% in an amount of not more than 300 $\mu$mol as a metal atom based on 1 mol of terephthalic acid unit, and the compound of at least one metal may be added to a stage on or after obtaining an oligomer having esterification conversion of not less than 90% in an amount of not less than 10 $\mu$mol as a metal atom based on 1 mol of terephthalic acid unit.

The esterification conversion of oligomer is calculated from the acid value and saponification value according to the following formula (1). The acid value was determined by subjecting a solution prepared by dissolving the oligomer in dimethyl formamide to titration using a 0.1N KOH/methanol solution, whereas the saponification value was determined by hydrolyzing the oligomer with a 0.5N KOH/ethanol solution and then subjecting the hydrolyzed reaction solution to titration using 0.5N hydrochloric acid.

$$\text{Esterification Conversion} = [(\text{Saponification Value}) - (\text{Acid Value})]/(\text{Saponification Value}) \times 100 \qquad (1)$$

When the amount of the above compound of at least one metal added to a stage before obtaining an oligomer having esterification conversion of not less than 90% exceed the above range, the esterification reaction is inhibited thereby causing deterioration of color tone and increase of generation of THF as the by-product. The amount of the above compound of at least one metal added to this stage is not more than preferably 270 $\mu$mol, more preferably not more than 130 $\mu$mol, still more preferably not more than 90 $\mu$mol, especially preferably not more than 45 $\mu$mol based on the above defined base. In this stage, it is most preferable to add no above compound of at least one metal.

The lower limit of amount of above compound of at least one metal added to the stage on or after obtaining an oligomer having esterification conversion of not less than 90% is 10 $\mu$mol as described above and preferably 45 $\mu$mol, more preferably 80 $\mu$mol. On the other hand, the upper limit thereof is not more than 300 $\mu$mol, preferably no more than 180 $\mu$mol, still more preferably not more than 130 $\mu$mol, especially not more than 100 $\mu$mol. The compound of at least one metal selected from Group 1 and Group 2 of the Periodic Table contributes to the increase of initial polymerization rate and the improvement of color tone and hydrolysis resistant of the obtained PBT. However, in case of using it in a too excess amount, the polymerization rate at the later stage is slowed thereby difficult to attain the above effect, and in case of using it in a too less amount, it is difficult to attain the improvement of the polymerization rate at the initial stage.

In the present invention, the molar ratio of compound of at least one metal selected from Group 1 and Group 2 of the Periodic Table to the titanium atom [(Group 1 and Group 2 of the Periodic Table)/(titanium)] is usually 0.1 to 5, preferably 0.1 to 2, more preferably 0.3 to 1.0, especially preferably 0.3 to 0.8.

The contents of metals such as the titanium atom, etc., may be determined by recovering these metals from the polymer by a method such as wet-ashing, and then measuring the amounts of the metals by methods such as an atomic emission spectrometric method, an atomic absorption spectrometric method and an inductively coupled plasma (ICP) method.

On or after the stage obtaining an oligomer having esterification conversion of not less than 90%, the compound of at least one metal may be added in the following manner. Thus, the compound of at least one metal is added at such stage that the oligomer at the outlet of the reactor has an intrinsic viscosity of usually not more than 0.50 dL/g, preferably not more than 0.40 dL/g, more preferably not more than 0.30 dL/g. The above intrinsic viscosity is measured by using a mix solvent of phenol/tetrachloroethane (1/1 by weight) at 30°C.

As a method of addition thereof, there are exemplified a method by addition thereof to the liquid phase portion of the polycondensation reactor through the portion of gas phase portion therein, a method by addition thereof to the liquid phase portion directly, or the like. In view of preventing entrainment, deactivation, precipitation, it is preferable to add thereof into the oligomer discharge line which is provided for discharging the oligomer from the end reactor at the esterification reaction step and supplying it to the first reactor at the polycondensation reaction step, and to supply it through the above oligomer discharge line into the polycondensation step.

The above compound of at least one metal which can be in a solid state may be directly supplied without dissolving or diluting with a solvent, but is preferably supplied in the form of a dilute solution prepared by diluting the compound of at least one metal with a solvent such as diol and water for stabilizing the amount of the catalyst supplied and reducing adverse influences such as deterioration in its quality and generation of impurities by deactivation of catalyst due to heat from the heating medium jacket. In this case, the upper limit of the concentration of compound of at least one metal is usually 10% by weight, preferably, 3% by weight, more preferably 1.5% by weight, especially preferably 0.5% by weight as the compound of at least one metal. The lower limit of the concentration of compound of at least one metal is usually 0.01% by weight, preferably, 0.05% by weight, more preferably 0.1% by weight as the compound of at least one metal. When the concentration of compound of at least one metal is too high, there is no dilution effect by the solvent and when the concentration of compound of at least one metal is too low, this leads to decrease of molecular weight thereof and excess load to the reactor, pressure-reducing device and polycondensation system because of supplying the solvent for the dilution into the reactor in a large amount.

As the solvent for dilution, it is preferable to use 1,4-butanediol as at least one solvent because of less effect for the process and the concentration thereof is usually not less than 50% by weight, preferably not less than 70% by weight, more preferably not less than 80% by weight, especially preferably not less than 90% by weight based on 100% by weight of total amount of solution containing the compound of at least one metal.

Also as the solvent for dilution, it is preferable to use water as at least one solvent because of effect for dissolving the compound of at least one metal stably. The lower limit of water concentration is usually 0.01% by weight, preferably 0.1% by weight, more preferably 0.3% by weight, especially preferably 0.5% by weight based on 100% by weight of total amount of solution containing the compound of at least one metal. On the other hand, the upper limit of water concentration, is usually 30% by weight, preferably 10% by weight, more preferably 5% by weight, especially preferably 3% by weight based on the above same basis. When the water concentration is too low, there tends to arise problems such as precipitation, blockading and deactivation because of reducing the solubility of the compound of at least one metal selected from Group 1 and Group 2 of the Periodic Table. When the water concentration is too high, there tends to lead the hydration of oligomer and prepolymer and also to increase the load to the pressure-reducing device.

A preferred embodiment of the present invention is a method by preparing a solution using 1,4-butanediol and water as the solvent. In this case, the concentration of 1,4-butanediol to the total solution is usually not less than 50% by weight, preferably not less than 60% by weight, more preferably not less than 70% by weight; the concentration of water to the total solution is usually not less than 1% by weight, preferably 3% by weight, more preferably 5% by weight; and the concentration of compound of at least one metal to the total solution is usually not less than 0.1% by weight, preferably 1% by weight, more preferably 3% by weight. After preparation of solution by using a preparation tank at usually 0 to 100°C, preferably 20 to 80°C, the solution is further diluted with 1,4-butanediol in the conduit and supplied to the oligomer conduit.

Final concentration of the compound of at least one metal in the solution of the compound of at least one metal supplied to the oligomer discharge line is, as described above, usually not more than 10% by weight, preferably not more than 2% by weight, more preferably not more than 1% by weight, especially preferably 0.5% by weight. The final line velocity of the solution of the compound of at least one metal supplied to the oligomer discharge line is usually not less than 0.01 m/s, preferably not less than 0.03 m/s, more preferably not less than 0.05 m/s, especially preferably not less than 0.1 m/s in view of preventing blockading the line to be supplied.

The upper limit of end carboxyl group concentration of obtained PBT in the present invention is usually not more than 30 $\mu$eq/g, preferably not more than 25 $\mu$eq/g, more preferably not more than 20 $\mu$eq/g, still more preferably not more than 15 $\mu$eq/g, especially preferably not more than 10 $\mu$eq/g. The lower limit thereof is usually not less than 1 $\mu$eq/g, preferably not less than 3 $\mu$eq/g, more preferably not less than 5 $\mu$eq/g. When the end carboxyl group concentration is too high, the hydrolysis resistance of PBT tends to deteriorate.

Meanwhile, even though the PBT initially shows a low end carboxyl group concentration, in the case where the end carboxyl group concentration in the PBT is increased by heat generated upon subsequent kneading and molding processes, there tend to be caused not only deterioration in hydrolysis resistance of the finally obtained product but also generation of gases such as tetrahydrofuran (THF). Therefore, the increase in end carboxyl group concentration in the PBT except for that due to a hydrolysis reaction thereof when being heat-treated in an inert gas atmosphere at 245°C for 40 min is in the range of usually 0.1 to 20 $\mu$eq/g, preferably 0.1 to 15 $\mu$eq/g, more preferably 0.1 to 10 $\mu$eq/g, still more preferably 0.1 to 8 $\mu$eq/g.

The hydrolysis reaction can be prevented by decreasing a water content in PBT, more specifically, by fully drying the PBT, but it is not possible to prevent problems caused upon molding such as generation of THF by the drying procedure. And, an increase in end carboxyl group concentration in the PBT due to decomposition reactions other than the hydrolysis reaction cannot be prevented by the drying procedure. In general, when a molecular weight of PBT is lower or a titanium content is higher, the increase in end carboxyl group concentration in PBT due to thermal decomposition reactions other than the hydrolysis reaction tends to become larger.

The reason for defining the temperature and time of the heat treatment for evaluating the increase in end carboxyl group concentration is that if the heat-treating temperature is too low or the heat-treating time is too short, the velocity of increase in end carboxyl group concentration in PBT tends to be too slow, and in the reverse case, the velocity tends to be too rapid, resulting in inaccurate evaluation thereof. Further, when the evaluation method is conducted at an extremely high temperature, side reactions other than the reaction for production of the end carboxyl group tend to be simultaneously caused, also resulting in inaccurate evaluation. Under the above-defined heat-treating conditions, the decrease in number-average molecular weight of PBT due to the reactions other than the hydrolysis reaction caused by water contained in the PBT can be ignored, and the increase in end carboxyl group concentration in PBT due to the hydrolysis reaction is regarded as being almost identical to the increase in end glycol group concentration between before and after the heat treatment. As a result, the increase in end carboxyl group concentration in PBT can be determined according to the following formula (2):

$$AV(d) = \Delta AV(t) - \Delta AV(h) = \Delta AV(t) - \Delta OH \qquad (2)$$

wherein $\Delta AV(d)$ is an amount of change in the end carboxyl group concentration due to thermal decomposition reactions other than the hydrolysis reaction; $\Delta AV(t)$ is a total amount of change in the end carboxyl group concentration between before and after the heat treatment; $\Delta AV(h)$ is an amount of change in the end carboxyl group concentration due to the hydrolysis reaction; and $\Delta OH$ is an amount of change in the end glycol group concentration between before and after the heat treatment.

From the standpoint of the reliability of the evaluation of the thermal decomposition reactions, a less occurrence of the hydrolysis reaction is preferable. Therefore, it is recommended that the water content in PBT used upon the heat treatment is usually controlled to not more than 200 ppm. Further, the end glycol group concentrations before and after the heat treatment may be determined by $^1$H-NMR measurement.

The end carboxyl group concentration in the PBT of the present invention may be determined by subjecting a solution prepared by dissolving the PBT in an organic solvent, etc., to titration using an alkali solution such as a sodium hydroxide solution.

The intrinsic viscosity of PBT obtained in the present invention is not specified. However, when the intrinsic viscosity is too low, the mechanical strength of PBT is deteriorated and when the intrinsic viscosity is high, the fluidity is deteriorated resulting deterioration of moldability. Therefore, the lower limit of the intrinsic viscosity is usually 0.70 dL/g, preferably 0.80 dL/g, more preferably 0.90 dL/g, especially preferably 1.10 g/dL. The upper limit of the intrinsic viscosity is usually 2.50 dL/g, preferably 1.50 dL/g, more preferably 1.40 dL/g, especially preferably 1.20 g/dL. The above intrinsic viscosity is a value measured at 30°C using a mixed solvent containing phenol and tetrachloroethane at a weight ratio of 1:1.

The crystallization temperature of the PBT of the present invention in the temperature depression course is usually in the range of 160 to 200°C, preferably 170 to 195°C, more preferably 175 to 190°C. The crystallization temperature in the temperature depression course used herein means an exothermic peak temperature due to crystallization, which is observed when a molten resin is cooled at a temperature drop rate of 20°C/min using a differential scanning calorimeter. The crystallization temperature in the temperature depression course is substantially in proportion to a crystallization velocity of the PBT. Namely, the higher the crystallization temperature in the temperature depression course, the higher the crystallization velocity. Therefore, when the crystallization temperature becomes higher, it is possible to shorten a time required for cooling an injection-molded product, resulting in enhanced productivity. On the other hand, when the crystallization temperature is low, a long period of time is required to crystallize the PBT upon injection-molding thereof, so that it is inevitably necessary to prolong the cooling time after the injection-molding, resulting in prolonged molding cycle time and, therefore, poor productivity.

The PBT of the present invention contains a cyclic dimer in an amount of usually not more than 5000 ppm, preferably not more than 4000 ppm, more preferably not more than 2000 ppm, still more preferably not more than 1500 ppm, especially preferably not more than 800 ppm based on the weight of the PBT. The lower limit of the cyclic dimer content is usually 10 ppm. Also, the PBT of the present invention contains a cyclic trimer in an amount of usually not more than 4000 ppm, preferably not more than 3000 ppm, more preferably not more than 1000 ppm, still more preferably not more than 800 ppm, especially preferably not more than 500 ppm based on the weight of the PBT. The lower limit of the cyclic trimer content is usually 10 ppm. When the respective cyclic dimer content and cyclic trimer content exceed the above-specified range, there tend to arise contamination of metal mold or rolls and bleed-out of these compounds onto the surface of films, resulting in problems such as elution of these compounds when used in applications such as food packaging.

The solution haze of the PBT of the present invention is not particularly limited. Specifically, a solution prepared by dissolving 2.7 g of the PBT in 20 mL of a mixed solvent containing phenol and tetrachloroethane at a weight ratio of 3:2 exhibits a solution haze of usually not more than 10%, preferably not more than 5%, more preferably not more than 3%, still more preferably not more than 1%. When the solution haze is too high, the transparency of the PBT tends to be deteriorated and the content of impurities therein also tends to be increased. As a result, when the PBT is used in the applications requiring a good transparency such as films, monofilaments and fibers, these molded products tend to be considerably deteriorated in commercial value thereof. The solution haze tends to be increased when the degree of deactivation of the titanium catalyst is large.

Next, the process for producing the PBT according to the present invention is described.

In the present invention, there is preferably used such a process in which terephthalic acid is continuously esterified with 1,4-butanediol in the presence of the above titanium catalyst in an esterification reactor while supplying at least a part of the 1,4-butanediol independently of the terephthalic acid to the esterification reactor. Hereinafter, the 1,4-butanediol supplied independently of the terephthalic acid to the esterification reactor is occasionally referred to merely as a "separately supplied 1,4-butanediol".

The 1,4-butanediol distilled off from the esterification reactor usually contains, in addition to 1,4-butanediol itself, other components such as water, THF, alcohol and dihydrofuran. Therefore, the 1,4-butanediol distilled off from the reactor is preferably purified to remove water, alcohol, THF, etc., therefrom after or while collecting the 1,4-butanediol by a condenser, etc., prior to circulating the 1,4-butanediol to the reactor.

Also, in the present invention, in order to prevent deactivation of the catalyst, not less than 10% by weight of the titanium catalyst used in the esterification reaction is preferably directly supplied to a liquid phase portion of the reaction solution independently of the terephthalic acid. Here, the liquid phase portion of the reaction solution means a portion located on a liquid phase side with respect to a boundary face between gas and liquid in the esterification reactor. The direct supply of the catalyst to the liquid phase portion of the reaction solution means that the titanium catalyst is directly added to the liquid phase portion using a conduit, etc., without passing through the gas phase portion in the reactor. The amount of the titanium catalyst directly added to the liquid phase portion of the reaction solution is preferably not less than 30% by weight, more preferably not less than 50% by weight, still more preferably not less than 80% by weight, especially preferably not less than 90% by weight.

In order to stabilize the amount of the catalyst supplied and prevent adverse influences such as deterioration in its quality due to heat generated from a heating medium jacket of the reactor, the above titanium catalyst is preferably diluted with a solvent such as 1,4-butanediol. The dilute catalyst solution may be prepared at a temperature of usually 20 to 150°C, preferably 30 to 100°C, more preferably 40 to 80°C in order to prevent the catalyst from being deactivated or agglomerated. Further, the dilute catalyst solution is preferably mixed with the separately supplied 1,4-butanediol in a conduit, etc, and then supplied to the esterification reactor from the standpoint of preventing deterioration in quality, crystallization and deactivation of the catalyst.

Further, the compound of at least one metal selected from Group 1 and Group 2 of the Periodic Table may also be supplied to the esterification reactor. The position where the compound of at least one metal is supplied is not particularly limited. The compound of at least one metal may be supplied to a region extending from the gas-phase portion to an upper surface of the reaction solution, or may be directly supplied to the liquid-phase portion of the reaction solution. In this case, the compound of at least one metal may be supplied together with terephthalic acid and the titanium compound, or may be supplied independent of these components. From the standpoint of stability of the catalyst, the compound of at least one metal is preferably supplied independent of the terephthalic acid and the titanium compound to the region extending from the gas-phase portion to the upper surface of the reaction solution.

An example of the continuous esterification process adopting a direct polymerization method is as follows. That is, the dicarboxylic acid component comprising terephthalic acid as a main component and the diol component comprising 1,4-butanediol as a main component are mixed with each other in a raw material mixing tank to prepare slurry. Then, the obtained slurry is fed to a single esterification reactor or a plurality of esterification reactors where the esterification reaction thereof is continuously conducted in the presence of the titanium catalyst, and of no Group 1 and Group 2 metal catalysts at a temperature of usually 180 to 260°C, preferably 200 to 245°C, more preferably 210 to 235°C under a pressure of usually 20 to 133 kPa, preferably 30 to 101 kPa, more preferably 50 to 90 kPa for a period of usually 0.5 to 10 hours, preferably 1 to 6 hours.

In the direct polymerization method, the molar ratio between terephthalic acid and 1,4-butanediol preferably satisfies the following formula (3):

$$BM/TM = 1.1 \text{ to } 5.0 \text{ (mol/mol)} \qquad (3)$$

wherein BM is the molar amount of 1,4-butanediol supplied from outside to the esterification reactor per unit time; and TM is the molar amount of terephthalic acid supplied from outside to the esterification reactor per unit time.

The above "1,4-butanediol supplied from outside to the esterification reactor" means a sum of 1,4-butanediols entering from outside into an inside of the reactor, including 1,4-butanediol supplied together with terephthalic acid in the form of a raw slurry or solution as well as 1,4-butanediol supplied independently of the terephthalic acid (separately supplied 1,4-butanediol) and 1,4-butanediol used as the solvent for diluting the titanium catalyst.

When the molar ratio BM/TM is less than 1.1, the conversion percentage into the PBT tends to be deteriorated, or the catalyst tend to be deactivated. When the molar ratio BM/TM is more than 5.0, not only deterioration in thermal efficiency but also increase in amount of byproducts such as THF tend to be caused. The molar ratio BM/TM is preferably in the range of 1.5 to 4.5, more preferably 2.0 to 4.0, still more preferably 3.1 to 3.8.

In the present invention, the esterification reaction is preferably conducted at a temperature not lower than the boiling point of 1,4-butanediol in order to shorten the reaction time. The boiling point of 1,4-butanediol may vary depending upon the reaction pressure, and is 230°C under 101.1 kPa (atmospheric pressure) and 205°C under 50 kPa.

As the esterification reactor, there may be used known reactors, specifically, there may be used any of vertical agitation complete mixing tanks, vertical thermal convection-type mixing tanks, tower-type continuous reactors, etc. The esterification reactor may be constituted by a single reactor or a plurality of reactors of the same or different type connected in series or in parallel. Among these reactors, preferred are those reactors equipped with a stirrer. As the agitator, there may be used not only ordinary agitating apparatuses constituted from a power section, a bearing, an axis and agitation blades, but also high-speed rotation type agitating apparatuses such as turbine-stator type high-speed rotating agitators, disk mill type stirrers and rotor mill type agitators.

The agitating method is not particularly limited. In the present invention, there may be used not only ordinary agitating methods in which the reaction solution is directly agitated at upper, lower and side portions of the reactor, but also a method of discharging a part of the reaction solution out of the reactor through a conduit, etc., agitating the solution using a line mixer, etc., and then circulating the reaction solution.

The kinds of agitation blades may be appropriately selected from known blades. Specific examples of the agitation blades may include propeller blades, screw blades, turbine blades, fan turbine blades, disk turbine blades, Faudler blades, full zone blades, maxblend blades, etc.

Next, the thus obtained esterification reaction product or ester exchange reaction product in the form of an oligomer is transferred into a polycondensation reactor. In this case, the oligomer has a number-average molecular weight of usually 300 to 3000, preferably 500 to 1500.

Upon production of the PBT according to the present invention, there may be usually used a plurality of polycondensation reactors which are different in reaction conditions from each other, preferably 2 to 5 stage reactors, more preferably 2 to 3 stage reactors, through which the polymer produced therein is successively increased in its molecular weight. The types of the polycondensation reactors may be any of vertical agitation complete mixing tanks, vertical thermal convection-type mixing tanks and tower-type continuous reactors, or the combination of these types of reactors. In particular, at least one of the polycondensation reactors is preferably equipped with a agitater. As the agitator, there may be used not only ordinary agitating apparatuses constituted from a power section, a bearing, an axis and agitation blades, but also high-speed rotation type agitating apparatuses such as turbine-stator type high-speed rotating agitators, disk mill type agitators and rotor mill type agitators.

The agitating method is not particularly limited. In the present invention, there may be used not only ordinary agitating methods in which the reaction solution is directly agitated at upper, lower and side portions of the reactor, but also the method of discharging a part of the reaction solution out of the reactor through a conduit, etc., agitating the solution using a line mixer, etc., and then circulating the reaction solution. In particular, it is recommended to use as at least one of the reactors, such a horizontal-type reactor having a horizontal rotation axis which is excellent in surface renewal property and self-cleanability.

In the present invention, it is essential that the compound of at least one metal is added at a stage after esterification conversion of not less than 90%. Especially, it is preferred that after obtaining an oligomer having esterification conversion of not less than 90% in the esterification reactor, the above metal compound diluted with a solvent is added into a feed line connected to a reactor conducting polycondensation reaction of the oligomer under absolute pressure of less than 20 kPa.

The polycondensation reaction is conducted in the presence of the catalyst at a temperature of usually 210 to 280°C, preferably 220 to 250°C, more preferably 230 to 245°C, in particular, while maintaining at least one of the reactors at a temperature of 230 to 240°C, preferably while stirring, for usually 1 to 12 hours, preferably 3 to 10 hours under a reduced pressure of usually less than 20 kPa, preferably less than 10 kPa, more preferably not more than 5 kPa. In order to prevent discoloration or deterioration of the polymer as well as increase in any side reactions such as formation of vinyl groups, at least one of the reactors is preferably operated under a high vacuum condition, i.e., under a pressure of usually not more than 1.3 kPa, preferably not more than 0.5 kPa, more preferably not more than 0.3 kPa.

The polymer thus obtained by the polycondensation reaction is usually discharged from a bottom of the polycondensation reactor, transported into an extrusion die, extruded therefrom into strands, and then cut into granules such as pellets and chips using a cutter while or after water-cooling.

In addition, in the polycondensation reaction process of the PBT, after conducting the melt polycondensation to produce PBT having a relatively low molecular weight, e.g., having an intrinsic viscosity of about 0.1 to 0.9 dL/g, the PBT may be successively subjected to solid state polycondensation (solid state polymerization) at a temperature lower than the melting point of the PBT.

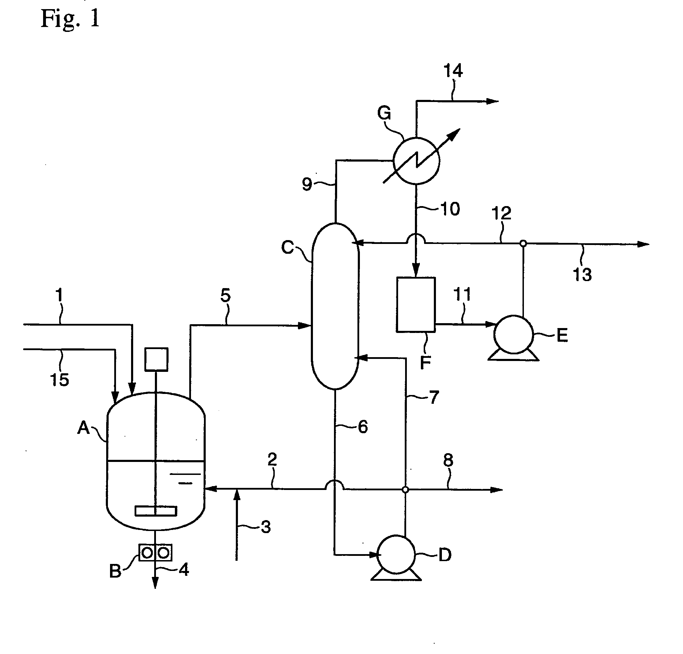

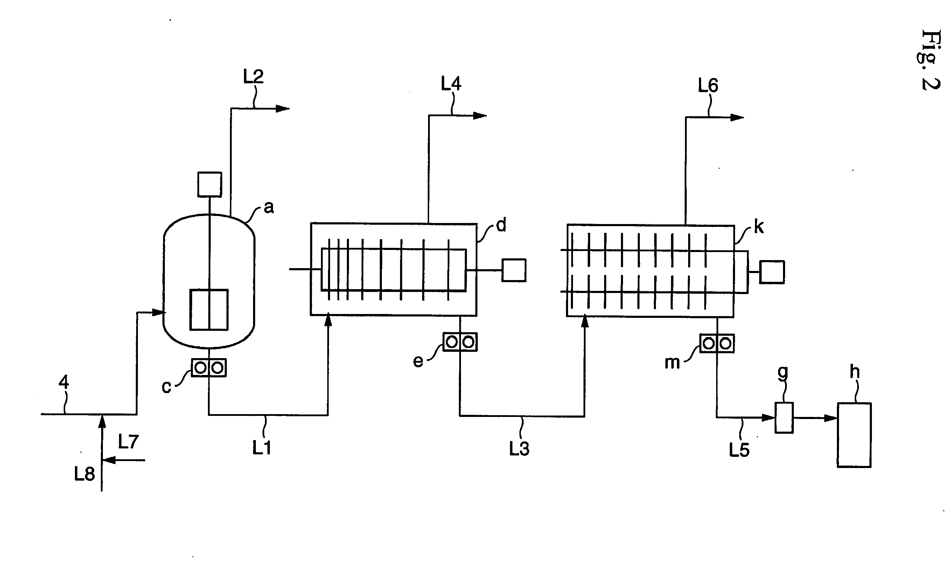

Next, the process for producing the PBT according to the preferred embodiment of the present invention is described below by referring to the accompanying drawings. Fig. 1 is an explanatory view showing an example of an esterification reaction process used in the present invention. Fig. 2 is an explanatory view showing an example of a polycondensation process used in the present invention.

Referring to Fig. 1, raw terephthalic acid is usually mixed with 1,4-butanediol in a raw material mixing tank (not shown), and the resultant slurry or a liquid is supplied through a raw material feed line (1) to a reactor (A). A titanium catalyst is preferably dissolved in 1,4-butanediol in a catalyst preparation tank (not shown) to prepare a catalyst solution, and then supplied through a titanium catalyst feed line (3). In Fig. 1, there is shown such an embodiment in which a recirculation line (2) for feeding the recirculated 1,4-butanediol is connected to the catalyst feed line (3) to mix the recirculated 1,4-butanediol and the catalyst solution with each other, and then the resultant mixture is supplied to a liquid phase portion of the reactor (A).

Gases distilled off from the reactor (A) are delivered through a distillate line (5) to a rectifying column (C) where the gases are separated into a high-boiling component and a low-boiling component. Usually, the high-boiling component comprises mainly of 1,4-butanediol, and the low-boiling component comprises mainly of water and THF.

The high-boiling component separated at the rectifying column (C) is discharged through a discharge line (6) and then through a pump (D). Then, a part of the high-boiling component is circulated through the recirculation line (2) to the reactor (A), and another part thereof is returned through a circulation line (7) to the rectifying column (C). Further, an excess of the high-boiling component is discharged outside through a discharge line (8). On the other hand, the low-boiling component separated at the rectifying column (C) is discharged through a gas discharge line (9), condensed in a condenser (G), and then delivered through a condensate line (10) to a tank (F) in which the condensed low-boiling component is temporarily stored. A part of the low-boiling component collected in the tank (F) is returned to the rectifying column (C) through a discharge line (11), a pump (E) and a circulation line (12), whereas a remaining part of the low-boiling component is discharged outside through a discharge line (13). The condenser (G) is connected to an exhaust apparatus (not shown) through a vent line (14). An oligomer produced in the reactor (A) is discharged therefrom through a discharge pump (B) and a discharge line (4).

In the process shown in Fig. 1, although the recirculation line (2) is connected to the catalyst feed line (3), these lines may be disposed independently of each other. Also, the raw material feed line (1) may be connected to the liquid phase portion of the reactor (A).

After a catalyst solution of compound of at least one metal selected from Group 1 and Group 2 of the Periodic Table is prepared in a catalyst preparation tank (not shown) with a prescribed concentration, this solution was fed into the 1,4-butanediol line (L8) through the feed line (L7) shown in Fig. 2, further diluted with 1,4-butanndiol and fed into the oligomer discharge line (4) shown in Fig.1.

Next, the oligomer supplied to a first polycondensation reactor (a) is polycondensed under reduced pressure in the first polycondensation reactor (a) to produce a prepolymer, and then supplied through a discharging gear pump (c) and a discharge line (L1) to a second polycondensation reactor (d). In the second polycondensation reactor (d), the polycondensation is further conducted usually under a pressure lower than that in the first polycondensation reactor (a), thereby converting the prepolymer into a polymer. The thus obtained polymer is delivered through a discharging gear pump (e) and a discharge line (L3) and then supplied to a third polycondensation reactor (k). The third polycondensation reactor (k) is a horizontal-type reactor comprising plural agitation blades blocks and having double self-cleaning type agitation blades. The polymer provided from the second polycondensation reactor (d) to the third polycondensation reactor (k) through the discharge line (L3) is subjected to further polycondensation, and thereafter, it is discharged through a discharging gear pump (m) and a discharge line (L5) from die head (g) from which the polymer is then extruded into molten strands. The obtained strands are cooled with water, etc., and then cut into pellets using a rotary cutter (h). The reference numbers (L2), (L4) and (L6) represent vent lines of the first polycondensation reactor (a), the second polycondensation reactor (d) and the third polycondensation reactor (k), respectively.

In the production process according to the present invention, it is possible to prevent from the deterioration of color tone and increase of impurities due to the deactivation of titanium catalyst, to prevent from the generation of tetrahydrofuran as a by-product, as well as to increase the polycondensation reaction rate. Therefore, PBT obtained by the process according to the present invention is excellent in color tone, hydrolysis resistance, heat stability, transparency and moldability, and can be suitably applied to injection-molded articles such as electric and electronic parts and automobile parts. Especially, since the PBT has a less content of impurities and is excellent in transparency, it has high utility value in such technical fields as films, monofilaments and fibers.

The PBT of the present invention may further contain oxidation inhibitors including phenol compounds such as 2,6-di-t-butyl-4-octyl phenol and pentaerithrityl-tetrakis[3-(3',5'-t-butyl-4'-hydroxyphenyl)propionate], thioether compounds such as dilauryl-3,3'-thiodipropionate and pentaerithrit-yl-tetrakis (3-laurylthiodipropionate), and phosphorus compounds such as triphenyl phosphite, tris(nonylphenyl)phosphite and tris(2,4-di-t-butylphenyl)phosphite; mold release agents including paraffin waxes, microcrystalline waxes, polyethylene waxes, long-chain fatty acids and esters thereof such as typically montanic acid and montanic acid esters, and silicone oils; or the like.

The PBT of the present invention may be blended with reinforcing fillers. The reinforcing fillers are not particularly limited. Examples of the reinforcing fillers may include inorganic fibers such as glass fibers, carbon fibers, silica/alumina fibers, zirconia fibers, boron fibers, boron nitride fibers, silicon nitride/potassium titanate fibers and metal fibers; organic fibers such as aromatic polyamide fibers and fluororesin fibers; plate-shaped inorganic fillers such as glass flakes, mica, metal foils; ceramic beads, asbestos, wollastonite, talc, clay, mica, zeolite, kaolin, potassium titanate, barium sulfate, titanium oxide, silicon oxide, aluminum oxide, magnesium hydroxide, etc. These reinforcing fillers may be used in the combination of any two or more thereof.

The PBT of the present invention may also contain a flame retardant in order to impart a good flame retardancy thereto. The flame retardant blended in the PBT is not particularly limited. Examples of the flame retardant may include organohalogen compounds, antimony compounds, phosphorus compounds, and other organic and inorganic flame retardants. Specific examples of the organohalogen compounds may include brominated polycarbonates, brominated epoxy resins, brominated phenoxy resins, brominated polyphenylene ether resins, brominated polystyrene resins, brominated bisphenol A, poly(pentabromobenzyl acrylate) or the like. Specific examples of the antimony compounds may include antimony trioxide, antimony pentaoxide, sodium antimonate or the like. Specific examples of the phosphorus compounds may include phosphoric acid esters, polyphosphoric acid, ammonium polyphosphate, red phosphorus or the like. Specific examples of the other organic flame retardants may include nitrogen compounds such as melamine and cyanuric acid, or the like. Specific examples of the other inorganic flame retardants may include aluminum hydroxide, magnesium hydroxide, silicon compounds, boron compounds or the like.

In addition, the PBT of the present invention may further contain, if required, various ordinary additives, if required. The additives are not particularly limited. Examples of the additives may include, in addition to stabilizers such as antioxidants and heat stabilizers, lubricants, mold release agents, catalyst deactivators, nucleating agent, crystallization accelerators or the like. These additives may be added during or after the polymerization reaction. The PBT may be further blended with stabilizers such as ultraviolet absorbers and weatherproof agents, colorants such as dyes and pigments, antistatic agents, foaming agents, plasticizers, impact modifiers, etc., in order to impart desired properties thereto.

Further, the PBT of the present invention may be blended, if required, with thermoplastic resins such as polyethylene, polypropylene, polystyrene, polyacrylonitrile, poly(methacrylic esters), ABS resins, polycarbonates, polyamides, poly(phenylene sulfides), poly(ethylene terephthalate), liquid crystal polyesters, polyacetal and poly(phenylene oxide); and thermosetting resins such as phenol resins, melamine resins, silicone resins and epoxy resins. These thermoplastic and thermosetting resins may be used in the combination of any two or more thereof.

The method of blending the above various additives and resins in the PBT is not particularly limited. In the present invention, there may be preferably used a blending method using a single- or twin-screw extruder as a kneader, which is equipped with a vent port for removal of volatile components. The respective components together with the additional optional components can be supplied to the kneader either simultaneously or sequentially. Also, two or more components selected from the respective components and the additional optional components may be previously mixed with each other.

The method for molding the PBT is not particularly limited, and any molding methods generally used for molding thermoplastic resins may be used in the present invention. Examples of the molding methods may include an injection-molding method, a blow-molding method, an extrusion-molding method, a press-molding method or the like.

The PBT of the present invention can be suitably used as injection-molded products such as electric and electronic parts and automobile parts because of excellent color tone, hydrolysis resistance, heat stability, transparency and moldability. In particular, the PBT of the present invention has a less content of impurities as well as an excellent transparency and moldability, and, therefore, can exhibit a remarkable improving effect when used in applications such as films, monofilaments and fibers.

EXAMPLES

The present invention is described in more detail below by Examples, but the Examples are only illustrative and not intended to limit the scope of the present invention. Meanwhile, the properties and evaluation items used in the following Examples and Comparative Examples were measured by the following methods.

(i) Esterification Conversion:

The esterification conversion was calculated from the acid value and saponification value according to the following formula (4). The acid value was determined by subjecting a solution prepared by dissolving the oligomer in dimethyl formamide to titration using a 0.1N KOH/methanol solution, whereas the saponification value was determined by hydrolyzing the oligomer with a 0.5N KOH/ethanol solution and then subjecting the hydrolyzed reaction solution to titration using 0.5N hydrochloric acid.

$$\text{Esterification Conversion} = [(\text{Saponification Value}) - (\text{Acid Value})]/(\text{Saponification Value}) \times 100 \qquad (4)$$

(ii) Titanium Concentration and Group 1 and Group 2 Metal Concentration in PBT:

PBT was wet-decomposed with high-purity sulfuric acid and nitric acid used for electronic industries, and measured using high-resolution ICP (inductively coupled plasma)-MS (mass spectrometer) manufactured by Thermo-Quest Corp.

(iii) Generation amount of THF as the by-product:

The THF concentration in the distilled liquid was measured by a gas chromatography method and the generation amount of THF was calculated by the following formula (5). The smaller value calculated by the following formula (5), the smaller generation amount of THF.

$$\text{Generation amount of THF} = (m/M) \times 100 \qquad (5)$$

In the formula (5), m represents an amount of discharged THF (mol) per unit time and M represents a feed amount of terephthalic acid per unit time.

(iv) Intrinsic Viscosity (IV):

The intrinsic viscosity was measured using an Ubbelohde viscometer as follows. That is, using a mixed solvent containing phenol and tetrachloroethane at a weight ratio of 1:1, the drop times (s) in a 1.0 g/dL polymer solution and the solvent only were respectively measured at a temperature of 30°C, and the intrinsic viscosity was calculated according to the following formula (6):

$$IV = [(1 + 4K_H\eta_{sp})^{0.5} - 1]/2K_HC \qquad (6)$$

wherein $\eta_{sp} = \eta/\eta_0 - 1$; $\eta$ is a drop time (s) in the polymer solution; $\eta_0$ is a drop time (s) in the solvent only; C is a concentration (g/dL) of the polymer solution; and $K_H$ is a Huggins constant (0.33 was used as the value of $K_H$).

(v) End Carboxyl Group Concentration:

A solution prepared by dissolving 0.5 g of PBT or an oligomer thereof in 25 mL of benzyl alcohol was titrated with a benzyl alcohol solution containing 0.01 mol/L of sodium hydroxide.

(vi) Color Tone of Pellets:

Using a color difference meter "Z-300A Model" manufactured by Nippon Denshoku Co., Ltd., the color tone of the pellets was evaluated by the measured b value of the pellets in a L,a,b color specification system. The lower the b value, the less the yellowness and the more excellent the color tone.

(vii) Increase in End Carboxyl Group Concentration due to Reactions other than Hydrolysis Reaction:

PBT pellets were pulverized, and the obtained PBT particles were dried and then filled in a 5 mmφ capillary. After an inside of the capillary was purged with nitrogen, the capillary was immersed in an oil bath controlled to 245°C under a nitrogen atmosphere. After 40 min, the capillary was taken out of the oil bath, and the contents thereof were rapidly cooled by liquid nitrogen. After the contents of the capillary was fully cooled, the contents were taken out of the capillary to measure and determine the end carboxyl group concentration and the end hydroxyl group concentration according to the above-mentioned formula (2).

(viii) Solution Haze:

2.70 g of PBT was dissolved in 20 mL of a mixed solvent containing phenol and tetrachloroethane at a weight ratio of 3:2 at 110°C for 30 min, and then cooled in a constant-temperature water vessel at 30°C for 15 min. The haze of the solution was measured a turbidity meter "NDH-300A" manufacture by Nippon Denshoku Co., Ltd., which had a cell length of 10 mm. The lower the haze value, the more excellent the transparency.

(ix) Number of Fisheyes:

A 50 μm-thick film was molded using a film quality testing system "Type FS-5" manufactured by Optical Control Testing Systems Inc., and the number of fisheyes having a size of not less than 200 μm per 1 $m^2$ of the film was counted.

(x) Hydrolysis Resistance (IV Retention Rate after Hydrolysis Test):

PBT pellets were placed in a pressure container filled with pure water so as not to come into direct contact with the water, and then the container was sealed. Thereafter, the pellets were treated at 121°C for 48 hours under saturated steam to measure an intrinsic viscosity (IV') thereof. The IV retention percentage was calculated from the above measured IV and IV' values according to the following formula (7):

$$\text{IV Retention Percentage (\%) = (IV'/IV) x 100} \qquad (7)$$

The larger the IV retention rate, the higher the hydrolysis resistance.

Example 1:

PBT was produced through the esterification process shown in Fig. 1 and the polycondensation process shown in Fig. 2 by the following procedure. First, terephthalic acid was mixed with 1,4-butanediol at 60°C at a molar ratio of 1.00:1.80 in a slurry preparation tank. The thus obtained slurry was continuously supplied at a feed rate of 40 kg/h from the slurry preparation tank through a raw material feed line (1) to an esterification reactor (A) equipped with a screw-type agitator which was previously filled with PBT oligomer having an esterification conversion of 99%. Simultaneously, a bottom component of a rectifying column (C) at 185°C (which contained 1,4-butanediol in an amount of not less than 98% by weight) was supplied at a feed rate of 18.4 kg/h through a recirculation line (2) to the reactor (A), and further a 6.0 wt% 1,4-butanediol solution of tetrabutyl titanate as a catalyst at 65°C was supplied through a titanium catalyst feed line (3) to the reactor (A) at a feed rate of 127 g/h. The water content in the catalyst solution was 0.2% by weight.

While maintaining an inside temperature and pressure of the reactor (A) at 230°C and 78 kPa, respectively, water and THF as produced as well as an excess amount of 1,4-butanediol were distilled off through a distillate line (5) and delivered to the rectifying column (C) where these distillates were separated into a high-boiling component and a low-boiling component. It was confirmed that the high-boiling bottom component after the system was stabilized, contained 1,4-butanediol in an amount of not less than 98% by weight. A part of the high-boiling component was discharged outside through a discharge line (8) so as to keep a liquid level in the rectifying column (C) constant. On the other hand, the low-boiling component was removed in a gaseous state from a top of the rectifying column (C), and condensed in a condenser (G). The thus recovered low-boiling component was discharged outside through a discharge line (13) so as to keep a liquid level in a tank (F) constant.

A predetermined amount of the oligomer produced in the reactor (A) was discharged through a discharge line (4) using a pump (B) to control the liquid level in the reactor (A) such that an average residence time of the liquid therewithin was 3 hours. The oligomer discharged through the discharge line (4) was continuously supplied to a first polycondensation reactor (a). After the system was stabilized, the oligomer was sampled at an outlet of the reactor (A). As a result, it was confirmed that the esterification conversion of the oligomer was 97.3%.

A catalyst solution comprising 5% by weight of magnesium acetate tetrahydrate, 20% by weight of pure water and 75% by weight of 1,4-butanediol was prepared in a catalyst preparation tank (not shown) by dissolving magnesium acetate tetrahydrate into pure water and adding 1,4-butanediol thereinto. The temperature of prepared solution was 25°C. This solution was fed into the 1,4-butanediol line (L8) through the feed line (L7) and whereby the prescribed amount of the solution as further low concentration solution was fed into the oligomer discharge line (4). The concentration of magnesium acetate tetrahydrate at the feed into the line (4) was controlled to 0.29% by weight, and the line velocity thereof was 0.18 m/s. The feed amount thereof was stable for 24 hours or more.

The inside temperature and pressure of the first polycondensation reactor (a) were maintained at 246°C and 2.4 kPa, respectively, and the liquid level therein was controlled such that the residence time therein was 120 min. While discharging water, tetrahydrofuran and 1,4-butanediol from the first polycondensation reactor (a) through a vent line (L2) connected to a pressure-reducing device (not shown), the initial polycondensation reaction was conducted. The reaction solution discharged from the first polycondensation reactor (a) was continuously supplied to a second polycondensation reactor (d).

The inside temperature and pressure of the second polycondensation reactor (d) were maintained at 239°C and 150 Pa, respectively, and the liquid level therein was controlled such that the residence time therein was 130 min.

While discharging water, tetrahydrofuran and 1,4-butanediol from the second polycondensation reactor (d) through a vent line (L4) connected to a pressure-reducing device (not shown), the polycondensation reaction was further conducted. The thus obtained polymer was discharged, delivered through a discharging gear pump (e) and a discharge line (L3) and provided to a third polycondensation reactor (k) continuously. The inside temperature and pressure of the third polycondensation reactor (k) were maintained at 238°C and 130 Pa, respectively, and the residence time therein was 70 min, thereby proceeding further polycondensation. The obtained polymer was extruded from a die head (g) continuously into strands. Then, the obtained strands were cut by a rotary cutter (h). As a result, it was confirmed that the obtained PBT had an intrinsic viscosity of 1.20 dL/g and end carboxyl group concentration of 17 µeq/g, had an excellent color tone and a good transparency, and exhibited a less content of impurities. And also, the velocity of increase in the end carboxyl group concentration upon heat residence stage was small. The results are collectively shown in Table 1.

Example 2:

The same procedure as defined in Example 1 was conducted except that magnesium acetate tetrahydrate was fed through the line (15) at the esterification reaction stage as shown in Table 1. After the system was stabilized, the oligomer was sampled at an outlet of the reactor (A). As a result, it was confirmed that the esterification conversion of the oligomer was 96.5%. On the other hand, the feed amount of magnesium acetate tetrahydrate into the oligomer discharge line (4) was changed as shown in Table 1 and the concentration of magnesium acetate tetrahydrate at the feed into the line (4) was controlled to 0.88% by weight. The reaction condition in the first polycondensation reactor (a) was the same condition as defined in Example 1 and the same polycondansation reaction as defined in Example 1 was conducted except that the inside temperature and pressure of the second polycondensation reactor (d) were changed to 240°C and 160 Pa, respectively, and the inside temperature of the third polycondensation reactor (k) was changed to 243°C. The analyzed values of the obtained PBT are shown in Table 1. As a result, it was confirmed that the obtained PBT had an excellent color tone and transparency, and exhibited a less content of impurities, and also, the velocity of increase in the end carboxyl group concentration upon heat residence stage was small.

Example 3:

The same procedure as defined in Example 1 was conducted except that magnesium acetate tetrahydrate was fed from the line (15) at the esterification reaction stage as shown in Table 1 and the average residence time was changed to 3.4 hrs. After the system was stabilized, the oligomer was sampled at an outlet of the reactor (A). As a result, it was confirmed that the esterification conversion of the oligomer was 95.4%. On the other hand, the feed amount of magnesium acetate tetrahydrate into the oligomer discharge line (4) and the reaction condition in the first polycondensation reactor (a) were the same feed amount and condition as defined in Example 1. The polycondensation reaction was conducted by the same condition as defined in Example 1 except that the inside temperature and pressure of the second polycondensation reactor (d) were changed to 241°C and 160 Pa, respectively, and the inside temperature of the third polycondensation reactor (k) was changed to 244°C. The analyzed values of the obtained PBT are shown in Table 1. As a result, it was confirmed that the obtained PBT had an excellent color tone and transparency, and exhibited a less content of impurities, and also, the velocity of increase in the end carboxyl group concentration upon heat residence stage was small.

Example 4:

The same esterification reaction as defined in Example 1 was conducted. A solution comprising 2.5% by weight of lithium acetate dihydrate instead of magnesium acetate tetrahydrate, 20% by weight of pure water and 77.5% by weight of 1,4-butanediol was prepared in a catalyst preparation tank (not shown) and this solution was fed into the 1,4-butanediol line (L8) through the feed line (L7) and whereby the prescribed amount of the solution as further low concentration solution was fed into the oligomer discharge line (4). The concentration of lithium acetate dihydrate at the feed into the line (4) was controlled to 0.08% by weight. The reaction condition in the first polycondensation reactor (a) was the same condition as defined in Example 1 and the same polycondansation reaction as defined in Example 1 was conducted except that the inside temperature of the second polycondensation reactor (d) was changed to 241°C and the inside temperature of the third polycondensation reactor (k) was changed to 242°C. The analyzed values of the obtained PBT are shown in Table 1. As a result, it was confirmed that the obtained PBT had an excellent color tone and transparency, and exhibited a less content of impurities, and also, the velocity of increase in the end carboxyl group concentration upon heat residence stage was small.

Example 5:

The same esterification reaction as defined in Example 1 was conducted except that the feed amount of tetrabutyl titanate was changed as shown in Table 1. After the system was stabilized, the oligomer was sampled at an outlet of the reactor (A). As a result, it was confirmed that the esterification conversion of the oligomer was 97.4%. The feed of magnesium acetate tetrahydrate and polycondensation reaction were conducted under the same condition as defined in Example 1. The analyzed values of the obtained PBT are shown in Table 1.

Example 6:

The same esterification reaction as defined in Example 1 was conducted. The feed amount of magnesium acetate tetrahydrate into the oligomer discharge line (4) was changed as shown in Table 1 and the concentration of magnesium acetate tetrahydrate at the feed into the line (4) was controlled to 0.58% by weight. The reaction condition in the first polycondensation reactor (a) was the same condition as defined in Example 1 and the same polycondansation reaction as defined in Example 1 was conducted except that the inside temperature of the second polycondensation reactor (d) was changed to 240°C and the inside temperature of the third polycondensation reactor (k) was changed to 241°C. The analyzed values of the obtained PBT are shown in Table 1. As a result, it was confirmed that the obtained PBT had an excellent color tone and transparency, and exhibited a less content of impurities, and also, the velocity of increase in the end carboxyl group concentration upon heat residence stage was small.

Comparative Example 1:

The same procedure as defined in Example 1 was conducted except that magnesium acetate tetrahydrate was not fed. As compared with the case of Example 1, the molecular weight of obtained PBT was low and the polymerizability thereof was deteriorated. The velocity of increase in the end carboxyl group concentration upon heat residence stage was accelerated. The results thereof are shown in Table 1.

Comparative Example 2:

The same procedure as defined in Example 1 was conducted except that the feed amount of magnesium acetate tetrahydrate was changed as shown in Table 1 and the concentration of magnesium acetate tetrahydrate at the feed into the oligomer discharge line (4) was controlled to 1.76% by weight. After 2 hours from the start of feed of magnesium acetate tetrahydrate, the feed amount became unstable, and it is confirmed that the lines tend to be blockaded. Further, as compared with the case of Example 1, the polymerizability was deteriorated. The results thereof are shown in Table 1.

Comparative Example 3:

The same procedure as defined in Example 1 was conducted except that the feed amount of tetrabutyl titanate was changed as shown in Table 1. The obtained PBT was high in the end carboxyl group concentration and the color tone thereof was deteriorated. The velocity of increase in the end carboxyl group concentration upon heat residence stage was accelerated. Further, the solution haze was high and it exhibited a high content of impurities. The results thereof are shown in Table 1.

Comparative Example 4:

The same procedure as defined in Example 1 was conducted except that the feed amount of magnesium acetate tetrahydrate was changed as shown in Table 1 and magnesium acetate tetrahydrate was not fed to the oligomer. The generation amount of THF as the by-product was large and the polimarizability was deteriorated. The results thereof are shown in Table 1.

Example 7:

The same procedure as defined in Example 1 was conducted except that the third polycondensation reactor (k) was not used, discharge line (L3) of the second polycondensation reactor (d) was directly connected to die head (g), the polymer obtained from the second polycondensation reactor (d) was extruded from the die head (g) continuously into strands and then, the obtained strands were cut by the rotary cutter (h). The obtained chips had an intrinsic viscosity of 0.85 dL/g. The thus obtained PBT pellets were charged into a 100 L double cone-type jacketed solid-phase polymerization reactor, and subjected to pressure reduction/purge with nitrogen three times. Next, the temperature in the reactor was raised to 190°C while controlling a pressure in the reactor to 130 Pa. After 7 hours from the temperature in the reactor reached to 190°C, the heating medium in the jacket was cooled. When the temperature in the reactor reached to 40°C or less, the content in the reactor was recovered. The analyzed values were collectively shown in Table 1. A PBT having less content of impurities and oligomers, low end carboxyl group concentration, excellent in color tone, good in transparency and excellent in hydrolysis resistance was obtained.

Example 8:

The same procedure as defined in Example 1 was conducted except that the third polycondensation reactor (k) was not used, discharge line (L3) of the second polycondensation reactor (d) was directly connected to die head (g), the polymer obtained from the second polycondensation reactor (d) was extruded from the die head (g) continuously into strands and then, the obtained strands were cut by the rotary cutter (h). The obtained chips had an intrinsic viscosity of 0.85 dL/g. The thus obtained PBT pellets were charged into a 100 L double cone-type jacketed solid-phase polymerization reactor, and subjected to pressure reduction/purge with nitrogen three times. Next, the temperature in the reactor was raised to 205°C while controlling a pressure in the reactor to 130 Pa. After 5 hours from the temperature in the reactor reached to 205°C, the heating medium in the jacket was cooled. When the temperature in the reactor reached to 40°C or less, the content in the reactor was recovered. The analyzed values were collectively shown in Table 1. A PBT having less content of impurities and oligomers, low end carboxyl group concentration, excellent in color tone, good in transparency and excellent in hydrolysis resistance was obtained.

<u>Table 1</u>

| Items | Unit | Examples | | |
|---|---|---|---|---|
| | | 1 | 2 | 3 |
| <u>Esterification</u> | | | | |
| Feed amount of tetrabutyl titanate | μmol/TPA-mol | 184 | 184 | 184 |
| Feed amount of magnesium acetate tetrahydrate | μmol/TPA-mol | - | 91 | 272 |
| Feed amount of lithium acetate dihydrate | μmol/TPA-mol | - | - | - |
| <u>Polycondensation</u> | | | | |
| Feed amount of magnesium acetate tetrahydrate | μmol/TPA-mol | 91 | 272 | 91 |
| Feed amount of lithium acetate dihydrate | μmol/TPA-mol | - | - | - |
| Generation amount of THF as a by-product | mol/TPA-mol | 32 | 40 | 46 |
| <u>Polymer properties</u> | | | | |
| Intrinsic viscosity | dL/g | 1.20 | 1.20 | 1.20 |
| End carboxyl group concentration | μeq/g | 17 | 23 | 25 |
| b value | - | -2.0 | -1.5 | -1.3 |
| ΔAV | μeq/g | 4 | 4 | 4 |
| Solution haze | % | ≤0.3 | ≤0.3 | ≤0.3 |
| Number of fisheyes | per m$^2$ | 10 | 14 | 25 |

### Table 1 (continued)

| Items | Unit | Examples | | |
|---|---|---|---|---|
| | | 4 | 5 | 6 |
| Esterification | | | | |
| Feed amount of tetrabutyl titanate | μmol/TPA-mol | 184 | 276 | 184 |
| Feed amount of magnesium acetate tetrahydrate | μmol/TPA-mol | – | – | – |
| Feed amount of lithium acetate dihydrate | μmol/TPA-mol | – | – | – |
| Polycondensation | | | | |
| Feed amount of magnesium acetate tetrahydrate | μmol/TPA-mol | – | 91 | 182 |
| Feed amount of lithium acetate dihydrate | μmol/TPA-mol | 91 | – | – |
| Generation amount of THF as a by-product | mol/TPA-mol | 32 | 29 | 32 |
| Polymer properties | | | | |
| Intrinsic viscosity | dL/g | 1.20 | 1.20 | 1.20 |
| End carboxyl group concentration | μeq/g | 20 | 27 | 19 |
| b value | – | -1.5 | -1.1 | -1.8 |
| ΔAV | μeq/g | 5 | 9 | 4 |
| Solution haze | % | ≤0.3 | 5 | ≤0.3 |
| Number of fisheyes | per m$^2$ | 16 | 47 | 12 |

20

Table 1 (continued)

| Items | Unit | Comparative Examples | | | |
|---|---|---|---|---|---|
| | | 1 | 2 | 3 | 4 |
| Esterification | | | | | |
| Feed amount of tetrabutyl titanate | μmol/TPA-mol | 184 | 184 | 550 | 184 |
| Feed amount of magnesium acetate tetrahydrate | μmol/TPA-mol | - | - | - | 363 |
| Feed amount of lithium acetate dihydrate | μmol/TPA-mol | - | - | - | - |
| Polycondensation | | | | | |
| Feed amount of magnesium acetate tetrahydrate | μmol/TPA-mol | - | 544 | 91 | - |
| Feed amount of lithium acetate dihydrate | μmol/TPA-mol | - | - | - | - |
| Generation amount of THF as a by-product | mol/TPA-mol | 32 | 32 | 32 | 50 |
| Polymer properties | | | | | |
| Intrinsic viscosity | dL/g | 1.05 | 1.00 | 1.20 | 1.11 |
| End carboxyl group concentration | μeq/g | 28 | 28 | 31 | 26 |
| b value | - | -1.0 | -0.5 | 0.5 | -1.0 |
| ΔAV | μeq/g | 12 | 6 | 17 | 14 |
| Solution haze | % | ≤0.3 | 1.2 | 45 | ≤0.3 |
| Number of fisheyes | per m$^2$ | 10 | 33 | 94 | 35 |

Table 2

| Items | Unit | Example 6 | Example 7 |
|---|---|---|---|
| IV | dL/g | 1.10 | 1.10 |
| End carboxyl group concentration | $\mu$eq/g | 8 | 10 |
| Content of cyclic dimer | ppm by weight | 700 | 1420 |
| Content of cyclic trimer | ppm by weight | 430 | 810 |
| Hydrolysis Resistance | % | 95 | 93 |

**Claims**

1. Polybutylene terephthalate produced in a presence of a catalyst comprising a titanium compound and a compound of at least one metal selected from Group 1 and Group 2 of the Periodic Table which polybutylene terephthalate has a titanium content of not more than 460 $\mu$mol as the titanium atom based on 1 mol of terephthalic acid unit, has a content of the compound of at least one metal selected from Group 1 and Group 2 of the Periodic Table of not more than 450 $\mu$mol as the metal atom based on 1 mol of terephthalic acid unit, and has an intrinsic viscosity of not less than 1.10 dL/g.

2. Polybutylene terephthalate according to claim 1, having an end carboxyl group concentration of 0.1 to 30 $\mu$eq/g.

3. Polybutylene terephthalate according to claim 1 or 2, wherein the titanium content is not more than 320 $\mu$mol as the titanium atom based on 1 mol of terephthalic acid unit.

4. Polybutylene terephthalate according to any one of claims 1 to 3, wherein the content of compound of at least one metal selected from Group 1 and Group 2 of the Periodic Table is not more than 180 $\mu$mol as the metal atom based on 1 mol of terephthalic acid unit.

5. Polybutylene terephthalate according to any one of claims 1 to 4, wherein the at least one metal selected from Group 1 and Group 2 of the Periodic Table is magnesium.

6. Polybutylene terephthalate according to any one of claims 1 to 5, having a content of a cyclic dimer of not more than 1500 ppm by weight.

7. Polybutylene terephthalate according to any one of claims 1 to 6, having a content of a cyclic trimer of not more than 1000 ppm by weight.

8. A process for continuously producing polybutylene terephthalate from terephthalic acid and 1,4-butanediol in a presence of a catalyst comprising a titanium compound and a compound of at least one metal selected from Group 1 and Group 2 of the Periodic Table, which process satisfies such the following requirements (a) to (c) that:

   (a) an oligomer is obtained by conducting a continuously esterification reaction of terephthalic acid and 1,4-butanediol in the presence of titanium catalyst in an amount of not more than 460 $\mu$mol as a titanium atom based on 1 mol of terephthalic acid unit;
   (b) polycondensation reaction of said oligomer is continuously conducted in the presence of compound of at least one metal selected from Group 1 and Group 2 of the Periodic Table as the catalyst in an amount of not more than 450 $\mu$mol as the metal atom based on 1 mol of terephthalic acid unit; and
   (c) said compound of at least one metal may be added to a stage before obtaining an oligomer having esterification conversion of not less than 90% in an amount of not more than 300 $\mu$mol as the metal atom based on 1 mol of terephthalic acid unit, and said compound of at least one metal may be added to a stage on or after obtaining an oligomer having esterification conversion of not less than 90% in an amount of not less than 10 $\mu$mol as the metal atom based on 1 mol of terephthalic acid unit.

9. A process according to claim 8, wherein the added amount of compound of at least one metal selected from Group 1 and Group 2 of the Periodic Table is not less than 45 $\mu$mol as the total metal atom based on 1 mol of terephthalic acid unit.

10. A process according to claim 8 or 9, wherein the added amount of compound of at least one metal selected from Group 1 and Group 2 of the Periodic Table is not more than 180 μmol as the total metal atom based on 1 mol of terephthalic acid unit.

11. A process according to any one of claims 8 to 10, wherein the obtained polybutylene terephthalate has an intrinsic viscosity of not less than 1.10 dL/g.

12. A process according to any one of claims 8 to 11, wherein the polycondensation is conducted at a temperature of not less than the melting point of polybutylene terephthalate to obtain a polybutylene terephthalate having an intrinsic viscosity of not less than 1.10 dL/g.

13. A process according to any one of claims 8 to 12, wherein the obtained polybutylene terephthalate has an end carboxyl group concentration of not more than 30 μeq/g.

14. A process according to any one of claims 8 to 13, wherein the compound of at least one metal selected from Group 1 and Group 2 of the Periodic Table is an organic acid salt.

15. A process according to any one of claims 8 to 14, wherein the at least one metal selected from Group 1 and Group 2 of the Periodic Table is magnesium.

16. A process according to any one of claims 8 to 15, wherein the compound of at least one metal selected from Group 1 and Group 2 of the Periodic Table is diluted with a diluent mainly comprising 1,4-butanediol and the diluted solution having a concentration of not more than 1.5% by weight as the compound of at least one metal is added.

17. A process according to claim 16, wherein the added diluted solution of compound of at least one metal selected from Group 1 and Group 2 of the Periodic Table has a water concentration of 0.01 to 10% by weight and a 1,4-butanediol content of not less than 50% by weight.

18. A process according to any one of claims 8 to 17, wherein the compound of at least one metal selected from Group 1 and Group 2 of the Periodic Table is supplied to an oligomer discharge line.

19. A process according to any one of claims 8 to 18, wherein the obtained polybutylene terephthalate has a titanium content of not more than 460 μmol as the titanium atom based on 1 mol of terephthalic acid unit.

20. A process according to any one of claims 8 to 18, wherein the obtained polybutylene terephthalate has a titanium content of not more than 320 μmol as the titanium atom based on 1 mol of terephthalic acid unit.

21. A process for producing polybutylene terephthalate comprising further conducting solid state polycondensation of polybutylene terephthalate produced by the process as defined in any one of claims 8 to 20 at a temperature of less than the melting point of polybutylene terephthalate.

Fig. 1

## Fig. 2

L6

L4

L2

k

d

a

m

e

c

L5

L3

L1

g

h

L7

L8

4

**INTERNATIONAL SEARCH REPORT**

International application No.

PCT/JP2006/316876

A. CLASSIFICATION OF SUBJECT MATTER
*C08G63/85*(2006.01)i

According to International Patent Classification (IPC) or to both national classification and IPC

B. FIELDS SEARCHED

Minimum documentation searched (classification system followed by classification symbols)
C08G63/85

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2006-152252 A  (Mitsubishi Chemical Corp.),<br>15 June, 2006 (15.06.06),<br>Claims<br>(Family: none) | 1-7<br>8-21 |
| P,A | JP 2006-045525 A  (Mitsubishi Chemical Corp.),<br>16 February, 2006 (16.02.06),<br>Full text<br>& WO 2006/001475 A1 | 1-21 |
| P,A | JP 2005-314674 A  (Mitsubishi Chemical Corp.),<br>10 November, 2005 (10.11.05),<br>Full text<br>& WO 2005/095487 A1 | 1-21 |

☒  Further documents are listed in the continuation of Box C.          ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
07 November, 2006 (07.11.06)

Date of mailing of the international search report
14 November, 2006 (14.11.06)

Name and mailing address of the ISA/
Japanese Patent Office

Facsimile No.

Authorized officer

Telephone No.

Form PCT/ISA/210 (second sheet) (April 2005)

26

**INTERNATIONAL SEARCH REPORT**

International application No.

PCT/JP2006/316876

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 08-020638 A (Mitsubishi Chemical Corp.),<br>23 January, 1996 (23.01.96),<br>Claims; examples; Par. No. [0011]<br>(Family: none) | 1-7<br>8-21 |
| X<br>A | JP 2005-097579 A (Toray Industries, Inc.),<br>14 April, 2005 (14.04.05),<br>Full text<br>(Family: none) | 1-7<br>8-21 |
| X<br>A | JP 2005-089516 A (Mitsubishi Chemical Corp.),<br>07 April, 2005 (07.04.05),<br>Full text<br>(Family: none) | 1-7<br>8-21 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9316183 A
- JP 8020638 A
- JP 8041182 A
- JP 2002284868 A
- JP 2002284870 A
- JP 10330469 A
- JP 10330468 A
- JP 62195017 A

**Non-patent literature cited in the description**

- Handbook of Saturated Polyester Resins. The Nikkan Kogyo Shinbun, Ltd, 22 December 1989, 192-193304